# EUROPÄISCHE PATENTANMELDUNG

(11) **EP 3 961 787 A1**
(43) Veröffentlichungstag der Anmeldung: **02.03.2022**
(21) Anmeldenummer: 21178091.1
(22) Anmeldetag: 07.06.2021
(51) Int. Cl.: H01M 10/06, H01M 50/609, H01M 50/60, H01M 10/42, H01M 50/70, H01M 10/20, H01M 50/673, H01M 50/682

(54) **AKKUMULATOR MIT FLÜSSIGEM ELEKTROLYT, INSBESONDERE EINE BLEIBATTERIE**

(30) Priorität: 28.08.2020 EP 20193255
(71) Anmelder: BatteryConsulting UG (haftungsbeschränkt), 52072 Aachen (DE)
(72) Erfinder: Schulte, Dominik, 52072 Aachen (DE)
(74) Vertreter: Raffay & Fleck

(57) **Zusammenfassung**

Die Erfindung betrifft einen Bleiakkumulator mit flüssigem Elektrolyt, insbesondere eine Bleibatterie.

Der Erfinder hat nun aber überraschend erkannt, dass das über den Elektroden stehende Elektrolytvolumen nachteilig insbesondere für das Alterungsverhalten ist und reduziert werden sollte.

Die Aufgabe der Erfindung ist es somit ein Verfahren oder eine Batterie anzugeben, um die Säureschichtung zu reduzieren.

Die Aufgabe wird insbesondere gelöst durch die Reduzierung des Elektrolytvolumens unmittelbar oberhalb der Elektroden. Dennoch sollte eine automatische Nachfüllung, möglichst durch oder allein durch Schwerkraft möglich bleiben. Dazu wird das Elektrolytvolumen insbesondere geteilt und werden diese Teilvolumen mit einander mit einer starken Diffusionsbarriere verbunden, beispielsweise durch einen nur dünnen und/oder langen Fluidverbindungsweg und/oder eine omni- oder semipermeable Membran. Dadurch kann die zur automatischen Nachfüllung vorgehaltene Menge zusätzlich ohne Nachteil deutlich erhöht werden.

## Beschreibung

### Stand der Technik

Die Erfindung betrifft einen Bleiakkumulator mit flüssigem Elektrolyt, insbesondere eine Bleibatterie.

Beispielsweise bei Bleibatterien wird Blei als negative und Bleidioxid als positive Aktivmasse auf den Elektroden genutzt. Der Elektrolyt, verdünnte Schwefelsäure, dient auch zum Transport der Ionen zwischen diesen beiden Elektroden innerhalb der Zelle. Im Gegensatz zu den meisten übrigen Batterietechnologien nimmt, beispielsweise bei einer Bleibatterie, der Elektrolyt aber zusätzlich auch an der Reaktion teil. Die Sulfationen des Elektrolyten werden beim Entladen in der Aktivmasse als Bleisulfat gebunden (die Säuredichte verringert sich somit) bzw. beim Laden in den Elektrolyten freigesetzt (die Säuredichte erhöht sich).

Bezüglich der Bauformen wird im Allgemeinen wie folgt unterschieden:
1. Geschlossene Bauart
   Bei der geschlossenen Variante liegt der Elektrolyt als Flüssigkeit vor. Die Batterien sind nicht gasdicht ausgeführt, d.h. die bei der Wasserzersetzung entstehenden Gase verlassen die Batterien. Der Elektrolyt befindet zwischen den Elektroden sowie oberhalb dieser als sogenannter freier Elektrolyt. Im Englischen wird diese Variante oft auch als "flooded" bezeichnet. Teilweise werden auch weitere Vorratsbehältnisse verwendet, um Elektrolyt nachzufüllen.
2. Verschlossene Bauart
   Die Batteriegehäuse sind gasdicht ausgeführt (engl. "sealed"), ein Überdruckventil dient als Sicherheit (engl. "Valve Regulated Lead-Acid", kurz VRLA). Hier wird zwischen zwei Realisierungsmöglichkeiten unterschieden:
   a. AGM-Batterien, bei denen der Elektrolyt in einem Vlies, meist aus Glasfaser, gebunden ist.
   b. Gel-Batterien, bei denen durch Zusatz von Gelbildner, in der Regel Kieselsäure (daher auch oft: Silicium-Gel-Akkumulator) der Elektrolyt (flüssige Schwefelsäure) gebunden wird.

In der Regel werden die Elektroden mit vertikal Erstreckung angeordnet, sodass in einer Richtung in der horizontalen eine, insbesondere wiederholte Anordnung aus Elektrode, Elektrolyt, Gegenelektrode entsteht.

Es können auch Elektrolytvorratsbehälter mit automatischer Nachfüllung oder Konstruktionen zum Ausgleich der Elektrolytmenge oder dessen Höhe in unterschiedlichen Teilen der Batterie vorgesehen werden, so beispielsweise bekannt aus der DE 1 571 989 A1, DE 2 402 920 A1, DE 3 002 288 A1, EP 1 665 415 B1 oder CN 2011 12 471 Y. Eine weitere Art der Elektrolytnachführung ist beispielsweise aus der DE 19 50 72 37 A1 bekannt. Im Allgemeinen wird die Nachfüllung des Elektrolyts durch Nutzung von Schwerkraft und einen die Nachfüllung des Elektrolyts begrenzenden Mechanismus realisiert, wobei in der Regel oberhalb des über den Elektroden stehenden Elektrolyts ein nicht flüssigkeitsgefüllter Raum vorhanden ist, der ohne den begrenzenden Mechanismus ebenfalls mit Elektrolyt befüllt würde und in den sich das Elektrolyt meist frei ausbreiten kann, beispielsweise können Wellen im Elektrolyt dahin schlagen, wobei das Elektrolyt aber das verbleibende Luftvolumen nicht verdrängen kann.

Grundsätzlich steht in der Regel deutlich mehr Elektrolyt über den Elektroden als sich in einem Nachfüllvorrat zum automatischen Nachfüllen, insbesondere allein durch Schwerkraft, befindet.

Der Erfinder hat nun aber überraschend erkannt, dass das über den Elektroden stehende Elektrolytvolumen nachteilig insbesondere für das Alterungsverhalten ist und reduziert werden sollte.

Durch die zyklische Nutzung eines Bleiakkumulators entsteht eine Säureschichtung. Die Säureschichtung ist ein Konzentrationsgradient des Elektrolyten und/oder der Säurekonzentration in vertikaler Richtung. Aufgrund der Schwerkraft ist dieser Gradient stets so gerichtet, dass sich im unteren Bereich dichtere Säure befindet, da sie eine höhere Dichte aufweist. Die Säureschichtung entsteht u.a. durch eine inhomogene Stromverteilung in den Elektroden und somit auch an der Aktivmassenoberfläche. Dies erfolgt für ge- und verschlossene Batterien. Wie die Praxis zeigt, entsteht hierdurch jedoch nur in sehr geringem Maße Säureschichtung. Messungen in geschlossenen Batterien des Erfinders zeigten ferner, dass das Vorhandensein des Elektrolytvolumens oberhalb der Platten signifikante Auswirkungen auf den Aufbau der Säureschichtung hat. Beim Laden wird beispielsweise die Säuredichte zwischen den Elektroden erhöht. Eine Durchmischung mit dem Elektrolyten im oberen Bereich erfolgt durch Diffusion und führt im oberen Bereich zwischen den Elektroden zu einer reduzierten Erhöhung der Säurekonzentration verglichen mit dem unteren Bereich zwischen den Elektroden. Daher liegen hier übliche Zeitkonstanten für derartige Veränderungen oder Ungleichgewichte in Bereichen von einer bis weniger Wochen. Der Effekt ist jedoch selbstverstärkend und verkürzt die Lebensdauer und Leistungsfähigkeit des Bleiakkumulators somit auf längere Sicht deutlich.

Säureschichtung ist in geschlossenen Batterien deutlich stärker ausgeprägt und führt hier u.a. zu einer beschleunigten Alterung. Dies wird weiter gefördert durch die Bindung des Elektrolyts.

Die Aufgabe der Erfindung ist es somit ein Verfahren oder eine Batterie anzugeben, um die Säureschichtung zu reduzieren.

Die Aufgabe wird insbesondere gelöst durch die Reduzierung des Elektrolytvolumens unmittelbar oberhalb der Elektroden. Dennoch sollte eine automatische Nachfüllung, möglichst durch oder allein durch Schwerkraft möglich bleiben. Dazu wird das Elektrolytvolumen insbesondere geteilt und werden diese Teilvolumen mit einander mit einer starken Diffusionsbarriere verbunden, beispielsweise durch einen nur dünnen und/oder langen Fluidverbindungsweg und/oder eine omni- oder semipermeable Membran. Dadurch kann die zur automatischen Nachfüllung vorgehaltene Menge zusätzlich ohne Nachteil deutlich erhöht, beispielsweise verdoppelt, werden. Auch ist es dabei möglich, das von den Elektroden getrennte Teilvolumen nicht mit Elektrolyt zu bevorraten sondern auch mit einer anderen Flüssigkeit, die ausschließlich oder überwiegend den dissoziierenden Bestandteil des Elektrolyts beinhaltet, beispielsweise lediglich Wasser.

Der konstruktive Aufbau ähnelt dabei auf den ersten Blick einigen bekannten Batteriekonstruktion mit Elektrolytnachfüllvorrat. Ein Unterschied besteht jedoch darin, dass nicht (nur) eine Nachfüllung des verbrauchten Elektrolyts ermöglicht werden soll, sondern die weitgehende Trennung des Elektrolyten zwischen den Elektroden und fast vollständig der Menge des über den Elektroden stehenden Elektrolyts bewirkt wird und die unmittelbar über den Elektroden stehende Elektrolytmenge oder mit diesem ohne Diffusionshemmung verbundene Flüssigkeitsmenge reduziert wird.

Die beschriebene Trennung der beiden Volumina und Reduzierung des unmittelbar über den Elektroden stehenden Elektrolyts hat diverse positive Auswirkungen, die Wichtigsten sind:
a. Signifikant geringere Säureschichtung führt zu einer deutlich längeren zyklischen Lebensdauer, bis um den Faktor 4 oder 5.
b. Ebenso führt die geringere Säureschichtung zu einer vereinfachten Diagnostik aufgrund der geringeren Überspannung.
c. Es gibt keine Abhängigkeit mehr der SOC-OCV Relation vom Wasserverlust. Auch dies begünstigt die Diagnostik.
d. Der Wasserverbrauch hat keinen Einfluss mehr auf die Performance bzw. Spannungslage. Daraus resultieren geringere Wartungsintervalle im stationären Bereich.
e. Das Flüssigkeitsvolumen im Vorratsbereich hat keinen Einfluss auf die Performance der Zelle, daher kann das Volumen im Vorratsbereich frei gewählt werden, z.B. könnte eine Volumenvergrößerung zu noch geringeren Wartungsintervallen führen.
f. Vom pos. Pol abfallende Korrosionsschichten können je nach Konstruktion keinen Kurzschluss mehr verursachen, da eine räumliche Trennung vorliegt und zudem Gase direkt nach außen geführt werden und sich nicht mehr im oberen Bereich der Zellen aufhalten können.

Gelöst wird die Aufgabe insbesondere durch einen Bleiakkumulator nach Anspruch 1, eine Verwendung nach Anspruch 13 und ein Verfahren gemäß Anspruch 14.

Der erfindungsgemäße Bleiakkumulator ist insbesondere ein geschlossener Bleiakkumulator und/oder BleiBleiakkumulator, insbesondere eine Batterie. Er weist mindestens eine Elektrode und mindestens eine Gegenelektrode auf, die in einem Elektrodenraum angeordnet sind, der sich auch oberhalb der mindestens einen Elektrode und der mindestens einen Gegenelektrode erstreckt. Der Bleiakkumulator weist weiter ein zwischen und über der mindestens einen Elektrode und mindestens einen Gegenelektrode im Elektrodenraum angeordnetes fließfähiges, insbesondere flüssiges, Elektrolyt, das insbesondere an der elektrochemische Reaktion des Bleiakkumulators teilnimmt, auf.

Der Bleiakkumulator weist zudem mindestens ein, insbesondere genau ein, vom Elektrolyt im Elektrodenraum getrenntes Reservoir mit einem Flüssigkeitsvorrat, insbesondere Elektrolyt- oder Wasservorrat, auf.

Erfindungsgemäß sind Reservoir und Elektrodenraum so angeordnet und weisen sie eine solche Fluidverbindung auf, dass der Flüssigkeitsspiegel im Reservoir höher liegt als der Flüssigkeitsspiegel des Elektrolyts im Elektrodenraum.

Dies ist insbesondere vorteilhaft, da die Flüssigkeit im Reservoir aufgrund der Schwerkraft in den Elektrodenraum nach fließen kann.

Erfindungsgemäß ist die Fluidverbindung zwischen Reservoir und Elektrodenraum so ausgebildet, dass sie
- flüssigkeitsführend ist, insbesondere Flüssigkeit des Reservoirs und/oder Elektrolyt führend und/oder
- Reservoir und Elektrodenraum zu kommunizierenden Gefäßen macht und/oder Reservoir, Elektrodenraum und Fluidverbindung kommunizierende Röhren darstellen und/oder eine die Behälter zu kommunizierenden Gefäßen verbindende Fluidverbindung ist und/oder
- eine einen Flüssigkeitsaustauch zwischen Reservoir und Elektrodenraum ermöglichende Fluidverbindung darstellt und/oder
- eine Fluidverbindung zwischen Reservoir und Elektrodenraum schafft, wobei die Fluidverbindung vollständig mit Flüssigkeit gefüllt ist und insbesondere ihre Mündungen in das Reservoir unterhalb dessen Flüssigkeitsspiegel und ihre Mündung in den Elektrodenraum an die Behälter unterhalb des Elektrolytspiegels und/oder unterhalb der obersten Erstreckung der mindestens einen Elektrode und/oder der mindestens einen Gegenelektrode liegt.

Unter unterhalb ist insbesondere zu verstehen, in einem Zustand, bei dem der Akkumulator in vorgesehener Orientierung und/oder mit Gasabführung oben und/oder mit vertikal orientierten Elektroden und/oder Gegenelektroden orientiert ist und/oder zu verstehen als auf der von der Gasabführung abgewandten Seite des Elektrolyspiegels.

Die Fluidverbindung kann beispielweise als Leitung, beispielsweise Rohr und/oder Schlauch ausgestaltet sein und/oder durch eine Membran gegeben sein.

Erfindungsgemäß ist die Fluidverbindung zwischen Reservoir und Elektrodenraum so ausgebildet, dass sie eine Diffusion zwischen Elektrolyt im Elektrolytraum und Flüssigkeitsvorrat im Reservoir ermöglicht, jedoch eine Diffusionshemmung, insbesondere der Diffusion von zumindest Sulfationen, zwischen Flüssigkeitsvorrat im Reservoir und Elektrolyt im Elektrodenraum darstellt und/oder bewirkt. Dies erfolgt insbesondere durch
- eine omni- oder semipermeable Membran, die in der Fluidverbindung so angeordnet ist, so dass sie insbesondere das Volumen der Fluidverbindung in einen dem Reservoir zugewandten Abschnitt und einen dem Elektrolytraum zugewandten Abschnitt teilt und/oder
- durch eine minimale freie Querschnittsfläche der Fluidverbindung, die um mindestens den Faktor fünf, insbesondere um mindestens den Faktor 20, kleiner ist als die Oberfläche des Elektrolyts im Elektrodenraum und/oder des Elektrodenelektrolytvolumen geteilt durch die vertikale Erstreckung der mindestens einen Elektrode und/oder Gegenelektrode, insbesondere durch die längste vertikale Erstreckung der mindestens einen Elektrode und Gegenelektrode und/oder
- durch eine Länge der Fluidverbindung größer als die das Doppelte, insbesondere das Fünffache, der längsten vertikalen Erstreckung der mindestens einen Elektrode und Gegenelektrode.

Die minimale freie Querschnittsfläche der Fluidverbindung stellt über Ihre Länge die geringste Querschnittsfläche dar und/oder kann, beispielsweise bei über die Länge der Fluidverbindung variierender Querschnittsfläche, eine Engstelle in der Fluidverbindung darstellen. Die Fluidverbindung kann über ihre Länge aber auch eine konstante Querschnittsfläche aufweisen.

Die Fluidverbindung zwischen Reservoir und Elektrodenraum schafft also insbesondere eine Fluidverbindung, die ein, insbesondere nur durch Schwerkraft bewirktes, Nachfüllen von Flüssigkeit in den Elektrodenraum ermöglicht, aber die Diffusion, zumindest von Sulfationen, hemmt, insbesondere verglichen mit dem Fall, dass das Flüssigkeitsvolumen des Reservoirs unmittelbar und ohne Trennung auf dem Elektrolyt im Elektrolytraum angeordnet wäre, und zwar unter gedachter Fortsetzung des Elektrolytraums nach oben ausgehend von der Höhe des Elektrolytstandes im Elektrodenraums mit dem an dieser Höhe herrschenden Querschnitts des Elektrolytraums.

Gelöst wird die Aufgabe auch durch die Verwendung einer Diffusionshemmung in einem Bleiakkumulator, wobei der Bleiakkumulator mindestens eine Elektrode und mindestens eine Gegenelektrode und mindestens ein zwischen und/oder unmittelbar über der mindestens einen Elektrode und/oder der mindestens einen Gegenelektrode, insbesondere in einem Elektrodenraum, angeordnetes Elektrodenelektrolytvolumen und mindestens einen Flüssigkeitsvorrat, insbesondere in einem Reservoir, zum Ersetzen von dissoziiertem Elektrolytanteil des Elektrodenelektrolytvolumens, insbesondere durch oder ausschließlich durch Schwerkraft, aufweist,
zur Reduzierung des Aufbaus einer Säureschichtung in dem mindestens einen Elektrodenelektrolytvolumen des Bleiakkumulators, wobei die Diffusionshemmung die Diffusion zwischen Elektrodenelektrolytvolumen und dem Flüssigkeitsvorrat behindert.

Gelöst wird die Aufgabe auch durch ein Verfahren in einem, insbesondere erfindungsgemäßen, Bleiakkumulator, wobei der Bleiakkumulator mindestens eine Elektrode und mindestens eine Gegenelektrode und mindestens ein zwischen und/oder unmittelbar über der mindestens einen Elektrode und/oder der mindestens einen Gegenelektrode, insbesondere in einem Elektrodenraum, angeordnetes Elektrodenelektrolytvolumen und mindestens einen Flüssigkeitsvorrat zum Ersetzen von dissoziiertem Elektrolytanteil des Elektrodenelektrolytvolumens, insbesondere durch oder ausschließlich durch Schwerkraft, aufweist,
zur Reduzierung des Aufbaus einer Säureschichtung in dem mindestens einen Elektrodenelektrolytvolumen des Bleiakkumulators, wobei die Diffusion zwischen Elektrodenelektrolytvolumen und dem Flüssigkeitsvorrat behindert wird.

Sofern der Flüssigkeitsvorrat, insbesondere im Reservoir, durch Elektrolyt gebildet wird, handelt es sich insbesondere um das gleiche Elektrolyt, mit gleicher oder abweichender Konzentration, wie das Elektrolyt im Elektrodenraum zwischen mindestens einen Elektrode und der mindestens einen Gegenelektrode oder über der mindestens einen Elektrode und mindestens einen Gegenelektrode. Bevorzugt wird es, wenn das Elektrolyt im Reservoir eine geringere Säure-Konzentration als das Elektrolyt im Elektrodenraum zwischen mindestens einen Elektrode und der mindestens einen Gegenelektrode oder über der mindestens einen Elektrode und mindestens einen Gegenelektrode aufweist oder sich im Reservoir lediglich Wasser befindet.

Durch die Diffusionshemmung wird die Diffusion zwischen Flüssigkeitsvorrat, insbesondere im Reservoir, und Elektrodenraum oder Elektrodenelektrolytvolumen verringert, insbesondere gegenüber einer Situation in der der Flüssigkeitsvorrat und/oder das Reservoir direkt über dem Elektrodenraum oder Elektrodenelektrolytvolumen angeordnet und dazwischen keine Trennung vorhanden wäre, insbesondere der Flüssigkeitsvorrat unmittelbar auf dem Elektrolyt des Elektrodenraums oder Elektrodenelektrolytvolumen stände. Eine solche Diffusionshemmung kann auf verschiedene Arten und Weisen realisiert werden. So kann beispielsweise zwischen Flüssigkeitsvorrat oder Reservoir und Elektrodenraum oder Elektrodenelektrolytvolumen eine länglich dünne Fluidverbindung, beispielsweise durch einen Schlauch oder ein Rohr vorhanden sein, die den Weg verlängert zwischen Reservoir und Elektrodenraum und/oder den Gewinnungsquerschnitt der Fluidverbindung reduziert. Auch ist es denkbar, den Flüssigkeitsvorrat oder das Reservoir direkt oberhalb des Elektrodenraums oder Elektrodenelektrolytvolumen anzuordnen und eine Trennwand zwischen Flüssigkeitsvorrat oder Reservoir und Elektrodenraum oder Elektrodenelektrolytvolumen vorzusehen, die nur eine oder mehrere Öffnungen und/oder Durchtritte aufweist, die zusammen einen, insbesondere zur Oberfläche des Elektrolyts im Elektrodenraum oder des Elektrodenelektrolytvolumens geringere Öffnungsfläche aufweisen. Dabei ist die Öffnungsfläche insbesondere um mindestens den Faktor fünf, insbesondere um mindestens den Faktor 20, kleiner als die Oberfläche des Elektrolyts im Elektrodenraum oder des Elektrodenelektrolytvolumen. Anstelle der Oberfläche des Elektrolyts im Elektrodenraum kann, insbesondere wenn der Elektrodenraum nach verjüngte ausgebildet ist, auch die Querschnittsfläche des Elektrodenraums am oberen Ende der Elektroden und/oder Gegenelektroden zum Vergleich herangezogen werden. Eine Diffusionshemmung kann aber auch durch eine omni- oder semi-permeable Membran zwischen Flüssigkeitsvorrat oder Reservoir und Elektrodenraum oder Elektrodenelektrolytvolumen erreicht werden, die die Diffusion hemmt. Dabei ist die omni- oder semi-permeable Membran zumindest für Wasser durchgängig. Die verschiedenen Mechanismen wie Verlängerung des Fluidverbindungsweges, Verringerung der Fluidverbindungsfläche und/oder Vorsehen einer Membran können auch kombiniert werden.

Mit Vorteil wird die Fluidverbindung zwischen Flüssigkeitsvorrat oder Reservoir und Elektrodenraum oder Elektrodenelektrolytvolumen so ausgestaltet, dass eine Entschichtung um mindestens den Faktor fünf, insbesondere mindestens um den Faktor 20, langsamer abläuft als ohne Trennung von Reservoir bzw. Flüssigkeitsvorrat und Elektrodenraum bzw. Elektrodenelektrolytvolumen und/oder verglichen einer Situation in der das Reservoir direkt über dem Elektrodenraum angeordnet und dazwischen keine Trennung vorhanden wäre, insbesondere die Flüssigkeit des Reservoirs unmittelbar auf dem Elektrolyt des Elektrodenraums stände.

Die Entschichtung verläuft exponentiell mit e^(-t/tau_0), dabei ist tau_0 die Zeitkonstante für die Durchmischung ohne getrennte Bereiche. Durch die Erfindung soll die Zeitkonstante tau_1 gelten, für diese gilt also: tau_ 1 > = 5* tau_0

Erfindungsgemäß ist der Flüssigkeitsvorrat und/oder das Volumen des Reservoirs mindestens doppelt so groß, insbesondere mindestens dreimal, bevorzugt mindestens fünfmal, besonders bevorzugt mindestens neunmal größer ist als das im Elektrodenraum über der mindestens einen Elektrode und/oder über der mindestens einen Gegenelektrode stehende Elektrolyt und/oder als das Volumen im Elektrodenraum oberhalb der mindestens einen Elektrode und/oder der mindestens einen Gegenelektrode.

Beim Vergleich des Flüssigkeitsvorrats kann auf das Volumen und/oder das Gewicht abgestellt werden.

Durch einen erfindungsgemäßen Bleiakkumulator kann weiterhin sichergestellt werden, dass auch im längeren Betrieb ausreichend Elektrolyt bzw. Wasser zur Verfügung steht, dennoch aber Entmischung deutlich reduziert ist, was zu einer Reduzierung von Alterungserscheinungen führt.

Vorteilhafterweise steht das Elektrolyt über der mindestens einen Elektrode und/oder über der mindestens einen Gegenelektrode maximal 40% der Elektrodenhöhe und/oder beträgt das im Elektrodenraum unmittelbar über der mindestens einen Elektrode und/oder über der mindestens einen Gegenelektrode stehende Elektrolytvolumen maximal 40% des Volumens des zwischen der mindestens einen Elektrode und mindestens einen Gegenelektrode im Elektrodenraum stehenden Elektrolyts.

Durch die Begrenzung des Elektrolyts, dass oberhalb der Elektrodenbeziehung sowie Gegenelektroden im Elektrodenraum steht, kann der Effekt der Erfindung besonders deutlich zutage treten. Mit besonderem Vorteil wird die über den Elektroden und Gegenelektroden stehende Elektrolytmenge im Elektrodenraum darüber hinaus noch weiter reduziert, insbesondere anstelle der 40 % insbesondere 20 %, besonders bevorzugt 10 %, als Obergrenze angesetzt.

Mit besonderem Vorteil verfügt der der Elektrodenraum über mindestens eine, insbesondere flüssigkeitsundurchlässige, Gasabführung. Dadurch kann sichergestellt werden, dass entstehendes Gas zuverlässig abgeführt wird. Er insbesondere ist hier eine flüssigkeitsundurchlässige Barriere vorhanden, die verhindert, dass durch den durch den Flüssigkeitsvorrat im Reservoir ausgeübten Druck Wasser weiter in die Gasabführung hineindrückt. Dies kann beispielsweise durch eine Membran realisiert werden. Insbesondere ist die Gasabführung so ausgestaltet, dass in der Gasabführung der Wasserstand unterhalb des Wasserstandes innerhalb des Reservoirs ausgebildet wird. Somit ist insbesondere die Membran unterhalb der oberen Begrenzung des Reservoirs in der Gasabführung angeordnet. Mit besonderem Vorteil ist sie unterhalb oder Höhenbereich des unteren Viertel des Reservoirs angeordnet. Mit besonderem Vorteil führt die Gasabführung durch das Reservoir, wobei die Gasabführung insbesondere vom Flüssigkeitsvolumen im Reservoir abgetrennt ist. So kann beispielsweise ein Rohr als Gasabführung durch das Reservoir hindurchführen.

Mit besonderem Vorteil ist der Elektrodenraum abgesehen von der Verbindung zum Reservoir flüssigkeitsdicht, aber insbesondere nicht gasdicht, ausgebildet. Insbesondere ist die Einheit aus Reservoir, Elektrodenraum und Fluidverbindung flüssigkeitsdicht, aber insbesondere nicht gasdicht, ausgebildet, sodass keine Flüssigkeit entweichen kann. Denkbar ist, insbesondere bei einer zusätzlich zur Fluidverbindung zwischen Reservoir und Elektrodenraum oder Gasabführung vorgesehenen Gasverbindung, die aber insbesondere keine Flüssigkeiten passieren lässt, auch eine gasdichte Ausbildung der Einheit aus Reservoir, Elektrodenraum und Fluidverbindung.

Bevorzugt steht das über der mindestens einen Elektrode und der mindestens einen Gegenelektrode stehende Elektrolyt in, insbesondere kommunizierender, Fluidverbindung mit dem Flüssigkeitsvorrat, insbesondere Elektrolyt- oder Wasservorrat, insbesondere in dem Reservoir.

Unter kommunizierender Fluidverbindung wird insbesondere eine solche Fluidverbindung verstanden, wie sie bei kommunizierenden Röhren vorhanden ist. Insbesondere gewährleistet eine solche Fluidverbindung, dass bei höher liegenden Reservoir Flüssigkeit schwerkraftgetrieben in den Elektrodenraum nachfließen kann.

Insbesondere weist das Reservoir eine Öffnung oder mittel zum Nachführen von Fluid, insbesondere Luft und/oder Verhinderung und/oder Reduzierung eines Unterdrucks im Reservoir auf, um das Nachlaufen nicht (wesentlich) zu behindern.

Bevorzugt übt der Flüssigkeitsvorrat einen Druck auf das im Elektrodenraum angeordnete Elektrolyt aus und ist und/oder bewirkt die Fluidverbindung eine Diffusionshemmung , wobei bevorzugt das Flüssigkeitsvorrats oder Reservoir und der Elektrodenraum oder Elektrodenelektrolytvolumen so angeordnet sind und die Fluidverbindung so ausgebildet ist, dass der Flüssigkeitsspiegel des Flüssigkeitsvorrats höher liegt als der Flüssigkeitsspiegel im Elektrodenraum oder des Elektrodenelektrolytvolumen und/oder die Oberkante des Reservoirs höher liegt als die Oberkante des Elektrodenraum und/oder das Reservoir sich weiter nach oben erstreckt als der Elektrodenraum.

Mit weiterem Vorteil sind Reservoir und Elektrodenraum so angeordnet und ist die Fluidverbindung so ausgebildet oder wird die Verwendung so durchgeführt wurde das Verfahren so ausgeführt, dass die Fluidverbindung zwischen Elektrolyt im Elektrodenraum oder zwischen Elektrodenelektrolytvolumen und Flüssigkeitsvorrat, insbesondere im Reservoir, keine Gasschicht aufweist und/oder nur durch Elektrolyt, Flüssigkeit des Flüssigkeitsvorrats und eine flüssigkeits- und/oder elektrolytpermeable Membran oder nur durch Elektrolyt und Flüssigkeit des Flüssigkeitsvorrats gegeben ist.

Besonderem Vorteil sind Reservoir und Elektrodenraum so angeordnet und ist die Fluidverbindung so ausgestaltet oder wird das Verfahren so ausgeführt oder die Verwendung so durchgeführt, dass eine Entschichtung eines Konzentrationsunterschiedes zwischen Reservoir und Elektrodenraum um mindestens den Faktor fünf, insbesondere um mindestens den Faktor 20, insbesondere mit einer mindestens fünf Mal, insbesondere mindestens 20 Mal, größeren Zeitkonstante, langsamer abläuft als bei Vorsehen des Flüssigkeitsvorrats des Reservoirs unmittelbar und ohne Trennung auf dem Elektrolyt im Elektrodenraum, insbesondere ohne Barriere und ohne Verengung zwischen dem Flüssigkeitsvorrat, der erfindungsgemäß im Reservoir vorhanden ist und dem Elektrolyt im Elektrodenraum. Insbesondere findet der Vergleich zu einer Situation statt, der die Kontaktfläche der Flüssigkeit mit dem Elektrolyt der Querschnittsfläche des Elektrolytraums auf Höhe des oberen Endes der mindestens einen Elektrode oder Gegenelektrode entspricht.

Vorteilhafterweise ist die Fluidverbindung so ausgestaltet oder wird das Verfahren so ausgeführt oder die Verwendung so durchgeführt, dass eine Diffusion zwischen zwischen und über der mindestens einen Elektrode und mindestens einen Gegenelektrode im Elektrodenraum angeordnetem Elektrolyt und Flüssigkeitsvorrat möglich ist, insbesondere unabhängig vom Betriebszustand des Bleiakkumulators.

Bevorzugt weist der Bleiakkumulator mehrere Bleiakkumulatorzellen auf, und ist insbesondere pro Bleiakkumulatorzelle ein Reservoir vorgesehen und mit dieser verbunden. Bevorzugt weist somit jede Bleiakkumulatorzelle einen Elektrodenraum auf, der von den anderen Elektrodenräumen getrennt ist und weist jede Bleiakkumulatorzelle ein Reservoir auf, das von den anderen Reservoiren getrennt ist.

Mit Vorteil ist die Gasabführung so ausgelegt, dass im Elektrodenraum entstehendes Gas aus dem Elektrodenraum sicher abgeführt wird und gleichzeitig keine Flüssigkeit in die Gasabführung gelangt, insbesondere die Gasabführung über eine gasdurchlässige Elektrolytbarriere verfügt und insbesondere die Elektrolytbarriere die maximale Höhe des Elektrolyts im Elektrodenraum definiert. Dazu ist die Elektrolytbarriere insbesondere zwischen Elektrolytraum und Gasabführung angeordnet. Bei der Elektrolytbarriere handelt es sich insbesondere um eine Membran.

Vorteilhafterweise ist die Fluidverbindung zwischen Reservoir und Elektrodenraum Teil der Gasabführung und/oder ist die Gasabführung durch die Fluidverbindung und/oder das Reservoir geführt. Im ersten Fall kann beispielsweise das im Elektrodenraum entstehende Gas zunächst durch die Fluidverbindung in das Reservoir geleitet und von dort über einen weiteren Teil der Gasabführung weiter abgeführt werden. In diesem Fall sind somit das Reservoir und die Fluidverbindung Teil der Gasabführung. Im zweiten Fall wird die Gasabführung nur durch die Fluidverbindung und oder/das Reservoir geführt, weiß sie aber insbesondere eine Trennung zwischen Gasabführung und Reservoir und Fluidverbindung auf. So kann beispielsweise die Gasabführung durch ein Rohr gebildet sein, dass durch die Fluidverbindung und/oder das Reservoir verläuft.

Mit Vorteil befindet sich das Reservoir oberhalb und/oder seitlich neben dem Elektrodenraum, insbesondere erstreckt sich das Reservoir und insbesondere der Flüssigkeitsvorrat zumindest auch oberhalb des Elektrodenraums und/oder oberhalb des im Elektrodenraum stehenden Elektrolyt.

Mit besonderem Vorteil ist oder wird der Elektrodenraum vollständig mit Elektrolyt gefüllt. Dadurch kann sichergestellt werden, dass durch den Druck, den die Flüssigkeit im Reservoir auf das Elektrolyt im Elektrolytraum ausübt, keine (unbeabsichtigte) Erhöhung des Elektrolytstandes im Elektrolytraum erfolgt.

In einer bevorzugten Ausgestaltung weist die Fluidverbindung ein langgestrecktes Fluidverbindungsvolumen und/oder eine flüssigkeits- und/oder elektrolytpermeable Membran auf.

Mit Vorteil endet die Fluidverbindung zum Elektrodenraum hin im oberen Drittel des Elektrodenraums und oder im Elektrolyt überstand und oder oberhalb der mindestens einen Elektrode und mindestens einen Gegenelektrode.

Bevorzugt endet die Fluidverbindung zum Reservoir hin an der unteren Begrenzung des Reservoirs, insbesondere an einem der am weitesten unten liegenden Punkte oder Bereiche des Reservoirs.

Mit besonderem Vorteil weißt der Elektrodenraum und oder die Gasabführung mindestens einen Dom zur Sammlung von Gas auf, wobei der Dom insbesondere in die Gasabführung und/oder einen Gasabführungskanal mündet und/oder der Dom Teil der Gasabführung ist. Insbesondere erstreckt sich der Dom über die gesamte Elektrolyt Oberfläche im Elektrodenraum und oder über die gesamte Querschnittsfläche des Elektrolytraums.

Weitere vorteilhafte Ausgestaltungen sollen rein exemplarisch anhand der nachfolgenden rein schematischen Figur erörtert werden.
Figur 1 zeigt einen Schnitt durch einen erfindungsgemäßen Bleiakkumulator.
Figur 2 zeigt einen Schnitt durch einen weiteren erfindungsgemäßen Bleiakkumulator.

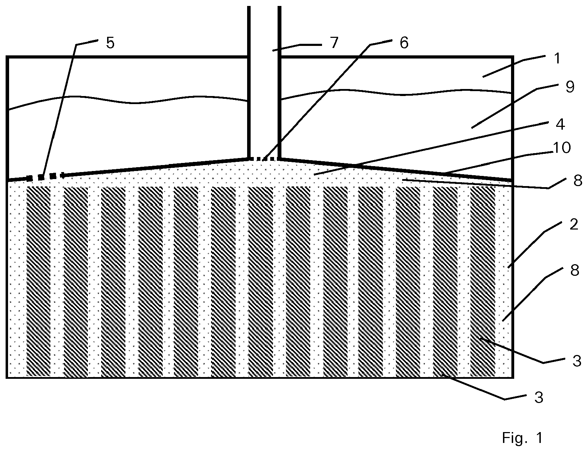

Figur 1 zeigt einen Schnitt durch einen erfindungsgemäßen Bleiakkumulator. Gezeigt ist ein äußeres Gehäuse in dem sich ein Elektrodenraum 8 und ein Reservoir 1 befinden. Reservoir 1 und Elektrodenraum 8 sind voneinander durch den Dom 10 getrennt. Es besteht nur eine kleine Fluidverbindung, die als Öffnung im Dom 10 ausgeführt ist, die aber durch eine Membran 5 semi permeable verschlossen ist. Im Elektrodenraum 8 befinden sich Elektroden 3 und Gegenelektroden 3. Zwischen ihnen ist Elektrolyt 2 angeordnet. Zu erkennen ist auch ein Elektrolytüberstand 4, der durch über den Elektroden und gegenelektrodenstehendes Elektrolyt gebildet wird. Im Reservoir 1 ist Wasser angeordnet. Der Elektrodenraum 8 ist vollständig mit Elektrolyt gefüllt, während das Reservoir 1 nur teilweise mit Wasser 9 gefüllt ist. Der Dom 10 weist neben der Öffnung für die Membran 5 eine weitere Öffnung für eine Membran 6 auf. Die Membran 6 ist gasdurchlässig, verhindert aber einen Durchtritt von Elektrolyt und Wasser. Die Membran 6 mündet in eine Gasabführung 7, die als Rohr ausgebildet ist und aus dem Gehäuse des Bleiakkumulators herausführt.

Entsteht nun im Elektrodenraum 8 Gas, wird dies durch den Dom 10 in die Mitte zur Membran 6 geleitet, kann dort die Membran 6 passieren und über die Gasabführung 7 entweichen.

Wird im Elektrodenraum 8 zwischen den Elektroden und Gegenelektroden 3 Elektrolyt 2 zersetzt, kann dieses durch den Elektrolytüberstand 4 ersetzt werden. Dann kann Wasser 9 aus dem Reservoir 1 durch die Membran 5 in den Elektrodenraum 8 nachströmen. Dabei färbt verhindert die Membran 6, dass das im Reservoir 1 stehende Wasser durch die Membran 5 hindurch Elektrolyt 2,4 in die Gasabführung 7 drückt.

Dadurch, dass das Reservoir 1 bzw. das darin befindliche Wasser 9 durch den Dom 10 und die Membran 5 vom Elektrolyt 2 und Elektrolyt überstand 4 getrennt ist, ist die Diffusion zwischen dem im Reservoir 1 befindlichen Wasser 9 und dem Elektrolyt 2,4 deutlich reduziert. Eine Entmischung kann nur sehr beschränkt stattfinden. Dadurch wird das Alterungsverhalten des Bleiakkumulators deutlich positiv beeinflusst.

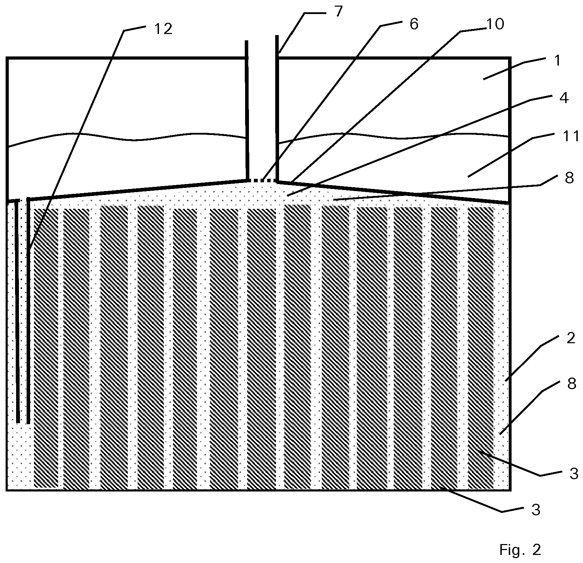

Figur 2 zeigt ebenfalls einen erfindungsgemäßen Bleiakkumulator im Schnitt. Er ist zum Bleiakkumulator gemäß Figur 1 ähnlich ausgeführt. Allerdings ist die Fluidverbindung zwischen Reservoir und Elektrodenraum und deren Diffusionshemmung abweichend ausgeführt. In Figur 2 ist keine Membran zu Diffusionshemmung vorgesehen, sondern ein langer dünner Kanal 12 als Diffusionshemmung eingebaut. Hier endet die Fluidverbindung nicht im oberen Bereich des Elektrodenraums. Auch ist hier im Reservoir 1 kein Wasser, sondern dasselbe Elektrolyt 11 wie im Elektrodenraum 8 vorgesehen. Es ist aber unproblematisch möglich, die Diffusionshemmung der Figuren 1 und 2 miteinander zu kombinieren und am Anfang, Ende oder innerhalb des Kanals 12 eine Membran wie in Figur 1 anzuordnen. Auch kann Wasser im Reservoir 1 vorgesehen werden, insbesondere wenn zusätzlich eine Membran 5 verwendet wird.

### Bezugszeichenliste

- 1: Reservoir
- 2: Elektrolyt
- 3: Elektrode/Gegenelektrode
- 4: Elektrolytüberstand
- 5: Membran
- 6: Membran
- 7: Gasabführung
- 8: Elektrodenraum
- 9: Wasser
- 10: Dom
- 11: Elektrolytvorrat
- 12: Diffusionshemmung

## Patentansprüche

1. Bleiakkumulator,
insbesondere geschlossener Bleiakkumulator und/oder BleiBleiakkumulator, insbesondere Batterie, aufweisend mindestens eine Elektrode (3) und mindestens eine Gegenelektrode (3), die in einem Elektrodenraum (8) angeordnet sind, der sich auch oberhalb der mindestens einen Elektrode (3) und der mindestens einen Gegenelektrode (3) erstreckt, wobei der Bleiakkumulator weiter ein zwischen und über der mindestens einen Elektrode (3) und mindestens einen Gegenelektrode (3) im Elektrodenraum (8) angeordnetes fließfähiges, insbesondere flüssiges, Elektrolyt (2), das insbesondere an der elektrochemische Reaktion des Bleiakkumulators teilnimmt, aufweist, wobei die mindestens eine Elektrode (3) und die mindestens einen Gegenelektrode (3) vom im Elektrodenraum (8) angeordneten fließfähigem Elektrolyt vollständig umgeben ist,
wobei der Bleiakkumulator mindestens ein, insbesondere genau ein, ein vom Elektrolyt im Elektrodenraum getrenntes Reservoir (1) mit einem Flüssigkeitsvorrat (9), insbesondere Elektrolyt- oder Wasservorrat, aufweist und wobei Reservoir (1) und Elektrodenraum (8) so angeordnet sind und eine solche Fluidverbindung (5) aufweisen, dass sie kommunizierende Gefäße darstellen und dass der Flüssigkeitsspiegel im Reservoir (1) höher liegt als der Flüssigkeitsspiegel des Elektrolyts (2,4) im Elektrodenraum,
**dadurch gekennzeichnet, dass** die Fluidverbindung (5) so ausgebildet ist, dass sie eine Diffusion zwischen Elektrolyt (2,4) im Elektrolytraum (8) und Flüssigkeitsvorrat (9) im Reservoir (1) ermöglicht, jedoch Diffusionshemmung zwischen Flüssigkeitsvorrat (9) im Reservoir (1) und Elektrolyt (2,4) im Elektrodenraum (8) dadurch darstellt und/oder bewirkt, dass sie eine omni- oder semipermeable Membran aufweist und/oder dass sie eine minimale freie Querschnittsfläche der Fluidverbindung, die um mindestens den Faktor fünf kleiner ist als die Oberfläche des Elektrolyts im Elektrodenraum und/oder des Elektrodenelektrolytvolumen geteilt durch die vertikale Erstreckung der mindestens einen Elektrode und/oder Gegenelektrode und/oder dass sie eine Länge größer als die das Doppelte der längsten vertikalen Erstreckung der mindestens einen Elektrode und Gegenelektrode aufweist.
dass der Flüssigkeitsvorrat (9) und/oder das Volumen des Reservoirs mindestens doppelt so groß, insbesondere mindestens dreimal, bevorzugt mindestens fünfmal, besonders bevorzugt mindestens neunmal größer ist als das im Elektrodenraum (8) über der mindestens einen Elektrode (3) und/oder über der mindestens einen Gegenelektrode (3) stehende Elektrolyt (4) und/oder als das Volumen (4) im Elektrodenraum oberhalb von der mindestens einen Elektrode (3) und der mindestens einen Gegenelektrode.

2. Bleiakkumulator nach Anspruch 1, wobei das Elektrolyt (4) über der mindestens einen Elektrode (3) und/oder über der mindestens einen Gegenelektrode (3) maximal 40% der Elektrodenhöhe steht und/oder das im Elektrodenraum unmittelbar über der mindestens einen Elektrode und/oder über der mindestens einen Gegenelektrode stehende Elektrolytvolumen (4) maximal 40% des Volumens des zwischen der mindestens einen Elektrode und mindestens einen Gegenelektrode im Elektrodenraum stehenden Elektrolyts (2) beträgt.

3. Bleiakkumulator nach einem der vorstehenden Ansprüche, wobei der Elektrodenraum (8) über mindestens eine, insbesondere flüssigkeitsundurchlässige (6), Gasabführung (7) verfügt.

4. Bleiakkumulator nach einem der vorstehenden Ansprüche, wobei das über der mindestens einen Elektrode und der mindestens einen Gegenelektrode stehende Elektrolyt in, insbesondere kommunizierender, Fluidverbindung mit einem Flüssigkeitsvorrat, insbesondere Elektrolyt- oder Wasservorrat (9), in dem Reservoir (1) steht und/oder wobei der Flüssigkeitsvorrat im Reservoir einen Druck auf das im Elektrodenraum angeordnete Elektrolyt ausübt und die Fluidverbindung eine Diffusionshemmung (5) bewirkt und/oder bewirkt und wobei das Reservoir (1) und der Elektrodenraum (8) so angeordnet sind und die Fluidverbindung so ausgebildet ist, dass der Flüssigkeitsspiegel im Reservoir höher liegt als der Flüssigkeitsspiegel im Elektrodenraum.

5. Akkumulator nach einem der vorstehenden Ansprüche, wobei Reservoir und Elektrodenraum so angeordnet sind und die Fluidverbindung so ausgebildet ist, dass die Fluidverbindung zwischen Elektrolyt im Elektrodenraum und Flüssigkeitsvorrat im Reservoir keine Gasschicht aufweist und/oder nur durch Elektrolyt, Flüssigkeit des Flüssigkeitsvorrats und eine flüssigkeits- und/oder elektrolytpermeable Membran oder nur durch Elektrolyt und Flüssigkeit des Flüssigkeitsvorrats gegeben ist.

6. Bleiakkumulator nach einem der vorstehenden Ansprüche, wobei Reservoir und Elektrodenraum so angeordnet die Fluidverbindung so ausgestaltet ist, dass eine Entschichtung eines Konzenrationsunterschiedes zwischen Reservoir und Elektrodenraum um mindestens den Faktor fünf, insbesondere mit einer mindestens fünf mal größeren Zeitkonstante, langsamer abläuft als bei Vorsehen des Flüssigkeitsvorrats des Reservoirs unmittelbar und ohne Trennung auf dem Elektrolyt im Elektrodenraum.

7. Bleiakkumulator nach einem der vorstehenden Ansprüche, wobei die Fluidverbindung so gestaltet ist, dass eine Diffusion zwischen zwischen und über der mindestens einen Elektrode und mindestens einen Gegenelektrode im Elektrodenraum angeordnetem Elektrolyt und Flüssigkeitsvorrat unabhängig vom Betriebszustand des Bleiakkumulators möglich ist.

8. Bleiakkumulator nach einem der vorstehenden Ansprüche, wobei der Bleiakkumulator mehrere Bleiakkumulatorzellen aufweist, und insbesondere pro Bleiakkumulatorzelle ein Reservoir vorgesehen und mit dieser verbunden ist.

9. Bleiakkumulator nach einem der vorstehenden Ansprüche, wobei die Gasabführung so ausgelegt ist, dass das entstehende Gas aus dem Elektrodenraum sicher abgeführt wird und gleichzeitig keine Flüssigkeit in diesen Bereich gelangt, insbesondere die Gasabführung über eine gasdurchlässige Elektrolytbarriere (6) aufweist und insbesondere die Elektrolytbarriere die maximale Höhe des Elektrolyts im Elektrodenraum definiert und/oder wobei die Fluidverbindung zwischen Reservoir und Elektrodenraum Teil der Gasabführung ist und/oder die Gasabführung durch die Fluidverbindung und/oder das Reservoir führt.

10. Bleiakkumulator nach einem der vorstehenden Ansprüche, wobei sich das Reservoir oberhalb und/oder seitlich neben dem Elektrodenraum befindet, insbesondere sich das Reservoir und insbesondere der Flüssigkeitsvorrat zumindest auch oberhalb des Elektrodenraums erstreckt.

11. Bleiakkumulator nach einem der vorstehenden Ansprüche, wobei die Fluidverbindung ein langestrecktes Fluidverbindungsvolumen und/oder eine flüssigkeits- und/oder elektrolytpermeable Membran aufweist

12. Bleiakkumulator nach einem der vorstehenden Ansprüche, wobei der Elektrodenraum mindestens einen Dom (10) zur Sammlung von Gas aufweist, wobei der Dom insbesondere in die Gasabführung und/oder einen Gasabführungskanal mündet und/oder der Dom Teil der Gasabführung ist.

13. Verwendung einer Diffusionshemmung in einem Bleiakkumulator, wobei der Bleiakkumulator mindestens eine Elektrode (3) und mindestens eine Gegenelektrode (3) und mindestens ein zwischen und/oder unmittelbar über der mindestens einen Elektrode und/oder der mindestens einen Gegenelektrode angeordnetes Elektrodenelektrolytvolumen (2,4) und mindestens einen mit dem Elektrodenelektrolytvolumen kommunizierenden Flüssigkeitsvorrat (9) zum Ersetzen von dissoziiertem Elektrolytanteil des Elektrodenelektrolytvolumens (2,4), insbesondere durch oder ausschließlich durch Schwerkraft, aufweist, zur Reduzierung des Aufbaus einer Säureschichtung in dem mindestens einen Elektrodenelektrolytvolumen des Bleiakkumulators, wobei die Diffusionshemmung (5) die Diffusion zwischen Elektrodenelektrolytvolumen und dem Flüssigkeitsvorrat behindert.

14. Verfahren in einem Bleiakkumulator, wobei der Bleiakkumulator mindestens eine Elektrode (3) und mindestens eine Gegenelektrode (3) und mindestens ein zwischen und/oder unmittelbar über der mindestens einen Elektrode und/oder der mindestens einen Gegenelektrode angeordnetes Elektrodenelektrolytvolumen (2,4) und mindestens einen mit dem Elektrodenelektrolytvolumen kommunizierenden Flüssigkeitsvorrat (9) zum Ersetzen von dissoziiertem Elektrolytanteil des Elektrodenelektrolytvolumens, insbesondere durch oder ausschließlich durch Schwerkraft, aufweist,
zur Reduzierung des Aufbaus einer Säureschichtung in dem mindestens einen Elektrodenelektrolytvolumen (2,4) des Bleiakkumulators, wobei die Diffusion zwischen Elektrodenelektrolytvolumen und dem Flüssigkeitsvorrat behindert (5) wird.
